# EUROPÄISCHE PATENTSCHRIFT

(11) **EP 2 756 213 B1**
(45) Veröffentlichungstag und Bekanntmachung des Hinweises auf die Patenterteilung: **28.03.2018**
(21) Anmeldenummer: 12766378.9
(22) Anmeldetag: 29.08.2012
(51) Int. Cl.: F16K 11/02, F16K 31/00, F16K 31/56

(54) **BISTABILES FLUIDVENTIL**
BISTABLE FLUID VALVE
SOUPAPE BISTABLE POUR FLUIDES

(30) Priorität: 15.09.2011 DE 102011113360
(43) Veröffentlichungstag der Anmeldung: 23.07.2014
(73) Patentinhaber: Airbus Defence and Space GmbH, 85521 Ottobrunn (DE)
(72) Erfinder: STORM, Stefan, 85716 Unterschleißheim (DE); RAMMER, Raphael, 81145 München (DE)
(74) Vertreter: Isarpatent
(86) Internationale Anmeldenummer: PCT/DE2012/100253
(87) Internationale Veröffentlichungsnummer: WO 2013/037359

(56) Entgegenhaltungen:
- DE-U1- 29 611 808
- FR-A1- 2 373 737
- US-A- 3 426 800

## Beschreibung

Die Erfindung betrifft ein bistabiles Fluidventil.

In den meisten hydraulischen Systemen werden Wege- oder Sperrventile eingesetzt, um den Fluidvolumenstrom umzukehren oder zu unterbrechen. Zur Steuerung des Ventils sind eine eigene Aktorik, Leistungsversorgung und Steuerelektronik notwendig. Werden schnell schaltende Ventile für hohe Ansteuerfrequenzen benötigt, fallen zwangsläufig hohe elektrische Verluste zur Steuerung der Ventile an.

Aus der US 3 426 800 A und DE 296 11 808 U1 sind bistabile Fluidventile bekannt, die bistabil betätigbare elastische Streifenelemente umfassen.

Hiervon ausgehend liegt der Erfindung die Aufgabe zugrunde, ein bistabiles Fluidventil bereitzustellen, das baulich einfach ausgebildet ist und aufgrund geringer bewegter Massen reaktionsschnell arbeiten kann.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die obige Aufgabe wird gemäß Anspruch 1 durch ein bistabiles Fluidventil gelöst, welches folgende Merkmale aufweist:
- zwei nebeneinander angeordnete und durch eine Trennwand gegeneinander abgeschlossene Ventilkammern, die jeweils gegenüberliegend eine Einlass- und eine Auslassöffnung aufweisen;
- ein elastisches Streifenelement, das aufgrund von Vorspannung in Längsrichtung S-förmig verformbar ist und beide Ventilkammern durchdringt, im Bereich der Trennwand gelenkig gelagert ist und sich an seinen beiden Enden innen an den Ventilkammern gelenkig abstützt und zwei Stellungen einnehmen kann, in denen dieses entweder die eine oder die andere Auslassöffnung abdichtend verschließt;
- ein Betätigungselement, das am Streifenelement befestigt ist, mittels dessen das Streifenelement zwischen den beiden Stellungen umschaltbar ist.

Das erfindungsgemäße bistabile Fluidventil zeichnet sich dadurch aus, dass nur ein einziges bewegliches Bauteil sehr geringer Masse in Form des elastischen Streifenelements vorgesehen ist, das daher reaktionsschnell arbeiten kann. Es ist insbesondere geeignet, in den Kopf einer Kolbenpumpe integriert zu werden.

Gemäß einer vorteilhaften Weiterbildung der Erfindung verschließt das Streifenelement jeweils die Einlassöffnung derjenigen Ventilkammer als Rückschlagventil, bei der in dieser Stellung die zugeordnete Auslassöffnung unverschlossen ist. Somit erfüllt das Ventil sowohl die Funktion als Umschaltventil als auch gleichzeitig die eines Rückschlagventils für den offenen Kanal.

Gemäß einer vorteilhaften Weiterbildung der Erfindung ist das Betätigungselement in der Nähe des mittigen Gelenks am Streifenelement befestigt. Dadurch ist eine einfache Betätigung möglich. Je näher das Betätigungselement am Gelenk liegt, umso größer ist die notwenige Betätigungskraft aber desto geringer der erforderliche Betätigungsweg und umgekehrt.

Gemäß einer vorteilhaften Weiterbildung der Erfindung ist das Streifenelement als Metallstreifen ausgebildet. Dadurch lässt sich dieses baulich einfach und wenig verschleißanfällig ausbilden.

Gemäß einer vorteilhaften Weiterbildung der Erfindung weist das Streifenelement im Bereich der Abdichtbereiche gegenüber den Auslassöffnungen elastische Dichtungsbeschichtungen auf, um eine zuverlässige Abdichtung sicherzustellen. Auch ist es von Vorteil, wenn die Dichtflächen für das Streifenelement, also die Ränder der Einlassöffnungen und Auslassöffnungen an die gekrümmte Form des Streifenelements angepasst sind, um einen gleichmäßigen Anpressdruck und damit eine gleichmäßige Abdichtung sicherzustellen.

Gemäß einer vorteilhaften Weiterbildung der Erfindung besteht die Trennwand aus zwei Dichtungsbändern. Diese Anordnung bildet baulich einfach sowohl eine zuverlässige Abdichtung der beiden Kammern gegeneinander als auch ein besonders einfaches Gelenk für das Streifenelement.

Gemäß einer vorteilhaften Weiterbildung der Erfindung sind die beiden Auslassöffnungen stromab des Fluidventils miteinander verbunden, Bei dieser Ausbildung wird ein Umschaltventil realisiert, bei der eine der beiden Einlassöffnungen mit dem Ventilauslass verbunden und die andere Einlassöffnung verschlossen ist.

Gemäß einer vorteilhaften Weiterbildung der Erfindung sind die beiden Einlassöffnungen stromauf des Fluidventils miteinander verbunden. Bei dieser Ausbildung wird ein Umschaltventil realisiert, bei der ein Ventileinlass alternativ mit der einen oder der anderen Auslassöffnung verbunden und die jeweils andere Auslassöffnung verschlossen ist.

Gemäß einer vorteilhaften Weiterbildung der Erfindung stützt sich das Streifenelement mindestens einendig an einer Stellschraube zur Einstellung der Vorspannkraft ab. Damit lässt sich das Umschaltverhalten an die Gegebenheiten anpassen, insbesondere die notwendige Kraft zur Umschaltung einstellen.

Vorzugsweise stützt sich das Streifenelement beidendig an zwei Stellschrauben zur Einstellung der Vorspannkraft ab, um bei größeren Stellwegen keine Unsymmetrie des Streifenelements zu erzeugen.

Gemäß einer vorteilhaften Weiterbildung der Erfindung weist das Streifenelement außer im Abdeckungsbereich der Auslassöffnungen Durchlässe für den Fluiddurchtritt auf. Dadurch wird die Strömung in der offenen Ventilkammer sehr wenig behindert. Die Durchlässe können in Form von Löchern ausgebildet sein. Alternativ ist es auch möglich, das Streifenelement relativ schmal auszubilden und nur in den Bereichen, wo die Öffnungen zu verdecken sind, zu verbreitern.

Gemäß einer vorteilhaften Weiterbildung der Erfindung ist dieses in den Kopf einer Kolbenpumpe, insbesondere einer Piezopumpe, integriert. Dies spart Bauraum und es kann auf ein eigenes Wegeventil verzichtet werden.

Weitere Vorteile, Merkmale und Einzelheiten ergeben sich aus der nachfolgenden Beschreibung, in der- gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Figur 1:: eine schematische Darstellung einer ersten Ausführungsform eines Fluidventils in zwei Stellungen;
- Figur 2:: eine schematische Darstellung einer zweiten Ausführungsform eines Fluidentils.

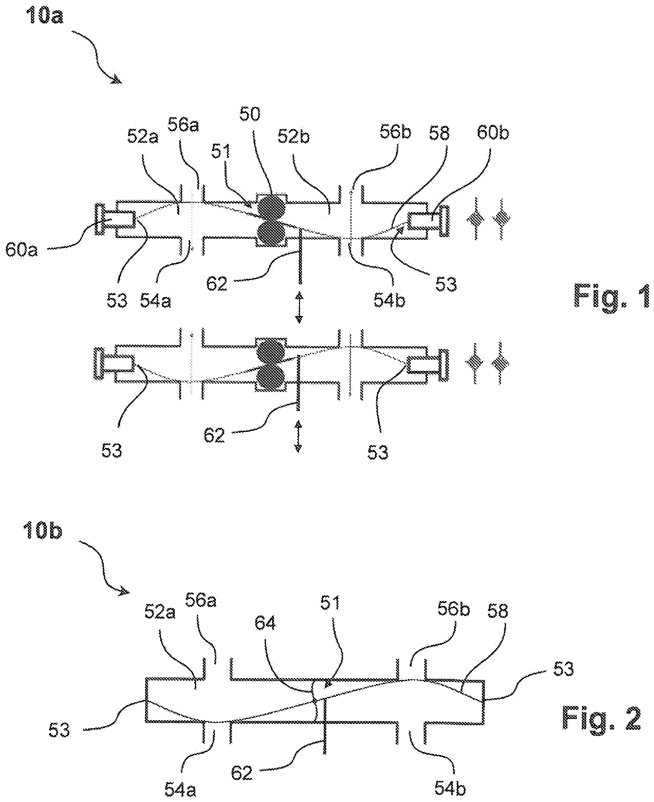

In **Figur 1** ist eine schematische Darstellung einer ersten Ausführungsform eines Fluidventils 10a in zwei Stellungen dargestellt. Dieses besteht aus zwei über eine Dichtung 50 voneinander getrennten Ventilkammer 52a, 52b. Beide Ventilkammer 52a, 52b besitzen jeweils eine Einlassöffnung 54a, 54b und eine Auslassöffnung 56a, 56b. Vorzugsweise kommunizieren die beiden Einlassöffnungen 54a, 54b miteinander, was nicht gezeigt ist. Im Inneren der beiden Ventilkammern 52a, 52b erstreckt sich ein S-förmiges elastisches Streifenelement 58, das mittig in der Dichtung 50 schwenkbar gelagert ist und sich an den beiden Enden 53 gelenkig an zwei Stellschrauben 60a, 60b abstützt. Die Dichtung 50 bildet also ein Gelenk 51 für das Streifenelement 58.

Das Streifenelement 58 hat die Funktion einer in der Lage veränderlichen Ventilklappe, die mit einer definierten Vorspannkraft auf den Ventilsitz von je einer Auslassöffnung 56a, 56b drückt und diese damit verschließt. Der Fluiddruck drückt das Streifenelement 58 gegen den Ventilsitz und erhöht damit die Druckkraft und den Abdichteffekt. Vorzugsweise ist die Situation bei den Einlassöffnungen 54a und 54b identisch. Der Unterschied besteht darin, dass der Fluiddruck das Streifenelement 58 vom Ventilsitz wegdrückt und bei genügender Druckhöhe daran vorbeiströmen kann während eine Rückströmung verhindert wird.

Das Streifenelement 58 ist derart ausgestaltet, dass bei geöffnetem Ventil der Fluidstrom ungehindert an dem Streifenelement 58 vorbei von der Ein- zur Auslassseite vorbeiströmen kann. Dazu ist das Streifenelement 58 auf der Ein- sowie auf der Auslassseite außer in den Abdeckbereichen für die Einlass- 54a, 54b und Auslassöffnungen 56a, 56b mit nicht gezeigten Durchlässen versehen, Damit kann das Fluid weitgehend ungehindert von den Einfassöffnungen 54a, 54b zu den Auslassöffnungen 56a, 56b strömen, wenn sich das Streifenelement 58 in einer Position befindet, wo dieses die Einlassöffnung 54b abdeckt, denn in diesem Fall kann das Fluid das Streifenelement 58 in der Art einer Rückschlagsicherung vom Sitz abheben und daran vorbeiströmen. In der anderen Kammer 52b liegt das Streifenelement 58 jedoch dichtend über der Auslassöffnung 56b und verhindert einen Abfluss von Fluid durch die Auslassöffnung 56b. Von den vier vorhandenen Öffnungen 54a, 54b, 56a, 56b werden bei jeder Stellung je eine Einlass- 54a, 54b und eine Auslassöffnung 56a, 56b abgedeckt. Damit kann der Fluidstrom bei wechselnder Stellung des Streifenelements 58 umgekehrt werden. Somit erfüllt das Streifenelement 58 die Funktion eines Rückschlagsventils und in Kombination mit der Kolbenpumpe16 oder anderen pulsierenden Fluidquellen ein Strömungsumkehrventil. Somit erfüllt das Streifenelement 58 die Funktion eines Rückschlagsventils und eines Strömungsumkehrventils.

Um das Streifenelement 58 von der in Figur 1 oben gezeigten in die in Figur 1 unten gezeigte Stellung zu bewegen, wird das Streifenelement 58 mittels einer Betätigungseinrichtung 62 betätigt. Durch eine Krafteinleitung von außen über die Betätigungseinrichtung 62 ist es möglich, das Streifenelement 58 umschnappen zu lassen und somit beliebig von der einen zur anderen Stellung hin und her zu wechseln. Dadurch wird eine Richtungsänderung des Fluidstroms ermöglicht. In den Figuren ist die Betätigungseinrichtung 62 als Schubstange dargestellt, die translatorisch im Wesentlichen senkrecht zur Erstreckungsrichtung am Streifenelement 58 angreift. Alternativ ist es auch möglich, die Betätigungseinrichtung 62 als Rotationselement auszubilden, das am mittigen Lagerpunkt angreift, beispielsweise als senkrecht zur Zeichenebene ausgerichtete Drehachse.

In Figur 1 sind die in den beiden Stellungen möglichen Fluidströmungen durch Pfeile dargestellt. Rechts in Figur 1 sind Ersatzschaltbilder für die Ventilfunktionen dargestellt, also in der in Figur 1 oben gezeigten Stellung arbeitet die linke Kammer 52a als geschlossenes Ventil während die rechte Kammer 52b als Rückschlagventil arbeitet. Bei der in Figur 1 unten gezeigten Stellung ist es umgekehrt. Mittels der Stellschrauben 60a, 60b kann die Vorspannkraft variiert werden kann, um das Umschnappen oder den Anpressdruck anzupassen. Diese Ausbildung ist besonders vorteilhaft für Kolben, insbesondere Piezopumpen, da Fluidstromgleichrichtung und Fluidstrornumkehrung in einem Element erfolgen können.

In **Figur 2** ist eine schematische Darstellung einer zweiten Ausführungsform eines Fluidventils 10b dargestellt, die derjenigen von Figur 1 weitgehend entspricht. Im Unterschied zur Ausführung von Figur 1 verwendet diese Ausführung keine Dichtung 54 sondern ein Festkörpergelenk 64. Ansonsten entspricht und arbeitet diese Ausführungsform wie die in Figur 1 beschriebene.

Wenn im Zusammenhang mit der Erfindung von Fluid die Rede ist, so ist damit jedes weitgehend inkompressible Fluid gemeint, vorzugsweise Hydraulikflüssigkeit.

### Bezugszeichenliste

- 10 a, b: Fluidventil
- 50: Dichtung
- 51: Gelenk
- 52 a, b: Ventilkammer
- 54 a, b: Einlassöffnung
- 56 a, b: Auslassöffnung
- 58: Streifenelement
- 60 a, b: Stellschrauben
- 62: Betätigungseinrichtung
- 64: Festkörpergelenk

## Patentansprüche

1. Bistabiles Fluidventil (10), umfassend:
- zwei nebeneinander angeordnete und durch eine Trennwand (50) gegeneinander abgeschlossene Ventilkammern (52a, 52b), die jeweils gegenüberliegend eine Einlass (54a, 54b) und eine Auslassöffnung (56a, 56b) aufweisen;
- ein elastisches Streifenelement (58), das aufgrund von Vorspannung in Längsrichtung S-förmig verformbar ist und beide Ventilkammer (52a, 52b) durchdringt, im Bereich der Trennwand (50) gelenkig gelagert ist und sich an seinen beiden Enden innen an den Ventilkammern (52a, 52b) gelenkig abstützt und zwei Stellungen einnehmen kann, in denen dieses entweder die eine oder die andere Auslassöffnung (56a, 56b) abdichtend verschließt;
- ein Betätigungselement (62), das am Streifenelement (58) befestigt ist, mittels dessen das Streifenelement (58) zwischen den beiden Stellungen umschaltbar ist.

2. Fluidventil nach Anspruch 1, **dadurch gekennzeichnet, dass** das Streifenelement (58) jeweils die Einlassöffnung (54a, 54b) derjenigen Ventilkammer in der Art eines Rückschlagventils verschließt, bei der in dieser Stellung die zugeordnete Auslassöffnung (56a, 56b) unverschlossen ist.

3. Fluidventil nach einem der vorherigen Ansprüche, **dadurch gekennzeichnet, dass** das Betätigungselement (62) in der Nähe des mittigen Gelenks (51) am Streifenelement (58) befestigt ist.

4. Fluidventil nach einem der vorherigen Ansprüche, **dadurch gekennzeichnet, dass** das Streifenelement (58) als Metallstreifen ausgebildet ist.

5. Fluidventil nach einem der vorherigen Ansprüche, **dadurch gekennzeichnet, dass** das Streifenelement (58) im Bereich der Abdichtbereiche gegenüber den Auslassöffnungen (54a, 54b) elastische Dichtungsbeschichtungen aufweist.

6. Fluidventil nach einem der vorherigen Ansprüche, **dadurch gekennzeichnet, dass** die Trennwand (50) aus zwei Dichtungsbändern besteht.

7. Fluidventil nach einem der vorherigen Ansprüche, **dadurch gekennzeichnet, dass** die beiden Auslassöffnungen (56a, 56b) stromab des Fluidventils (10) miteinander verbunden sind.

8. Fluidventil nach einem der vorherigen Ansprüche, **dadurch gekennzeichnet, dass** die beiden Einlassöffnungen (54a, 54b) stromauf des Fluidventils (10) miteinander verbunden sind.

9. Fluidventil nach einem der vorherigen Ansprüche, **dadurch gekennzeichnet, dass** sich das Streifenelement (58) mindestens einendig an einer Stellschraube (60) zur Einstellung der Vorspannkraft abstützt.

10. Fluidventil nach Anspruch 9, **dadurch gekennzeichnet, dass** sich das Streifenelement (58) beidendig an zwei Stellschrauben (60a, 60b) zur Einstellung der Vorspannkraft abstützt.

11. Fluidventil nach einem der vorherigen Ansprüche, **dadurch gekennzeichnet, dass** das Streifenelement (58) außer im Abdeckungsbereich der Auslassöffnungen (56a, 56b) Durchlässe für den Fluiddurchtritt aufweist

12. Fluidventil nach einem der vorherigen Ansprüche, **dadurch gekennzeichnet, dass** dieses als Strömungsumkehrventil geschaltet ist.

13. Fluidventil nach einem der vorherigen Ansprüche, **dadurch gekennzeichnet, dass** dieses in den Kopf einer Kolbenpumpe, insbesondere einer Piezopumpe, integriert ist.

## Claims

1. Bistable fluid valve (10), comprising:
- two mutually adjacent valve chambers (52a, 52b) sealed off from one another by means of a partition wall (50) and with a mutually opposing inlet opening (54a, 54b) and outlet opening (56a, 56b);
- an elastic strip element (58) deformable in the longitudinal direction in an 'S' shape because of prestressing and penetrating both the valve chambers (52a, 52b), being flexibly supported in the region of the partition wall (50) and at both its ends flexibly abutting the valve chambers (52a, 52b) inside and able to assume two positions in which it sealingly closes either the one or the other outlet opening (56a, 56b);
- an actuation element (62) fastened to the strip element (58) by means of which the strip element (58) can be switched between the two positions.

2. Fluid valve according to claim 1, **characterised in that** the strip element (58) closes the inlet opening (54a, 54b) respectively of the valve chamber in the nature of a non-return valve wherein in this position the assigned outlet opening (56a, 56b) is not closed.

3. Fluid valve according to any one of the preceding claims, **characterised in that** the actuating element (62) is fastened to the strip element (58) in proximity to the central linkage (51).

4. Fluid valve according to any one of the preceding claims, **characterised in that** the strip element (58) is provided as a metal strip.

5. Fluid valve according to any one of the preceding claims, **characterised in that** the strip element (58) in the region of the sealing regions opposing the outlet openings (54a, 54b) has elastic sealing coatings.

6. Fluid valve according to any one of the preceding claims, **characterised in that** the partition wall (50) comprises two sealing strips.

7. Fluid valve according to any one of the preceding claims, **characterised in that** the two outlet openings (56a, 56b) are interconnected downstream of the fluid valve (10).

8. Fluid valve according to any one of the preceding claims, **characterised in that** the two inlet openings (54a, 54b) are interconnected upstream of the fluid valve (10).

9. Fluid valve according to any one of the preceding claims, **characterised in that** the strip element (58) at least at one end abuts against an adjusting screw (60) for regulating the prestressing force.

10. Fluid valve according to claim 9, **characterised in that** the strip element (58) at both ends abuts against two adjusting screws (60a, 60b) for regulating the prestressing force.

11. Fluid valve according to any one of the preceding claims, **characterised in that** the strip element (58) has passageways for the fluid to pass through except in the covered region of the outlet openings (56a, 56b).

12. Fluid valve according to any one of the preceding claims, **characterised in that** it is switched as a flow reverse valve.

13. Fluid valve according to any one of the preceding claims, **characterised in that** it is integrated into the head of a reciprocating pump, in particular a piezo pump.

## Revendications

1. Soupape bistable pour fluides(10) comprenant :
- deux chambres de soupape (52a, 52b) disposées l'une à côté de l'autre et fermées l'une par rapport à l'autre par une paroi de séparation (50), lesquelles présentent respectivement de manière opposée une ouverture d'entrée (54a, 54b) et une ouverture de sortie (56a, 56b) ;
- un élément élastique en forme de bande (58), lequel est déformable en forme de S en sens longitudinal en raison de précontrainte et traverse les deux chambres de soupape (52a, 52b), lequel est logé de manière articulée dans la partie de la paroi de séparation (50) et s'appuie, de manière articulée intérieurement sur les chambres de soupape (52a, 52b), sur ses deux extrémités et peut prendre deux positions dans lesquelles celui-ci obture de manière étanche soit l'une ou l'autre ouverture de sortie (56a, 56b) ;
- un élément d'actionnement (62) qui est fixé sur l'élément en forme de bande (58), au moyen duquel l'élément en forme de bande (58) est commutable entre les deux positions.

2. Soupape pour fluides selon la revendication 1, **caractérisée en ce que** l'élément en forme de bande (58) obture respectivement l'ouverture d'entrée (54a, 54b) de la chambre de soupape à la manière d'un clapet anti-retour, dans laquelle, dans cette position, l'ouverture de sortie (56a, 56b) correspondante est non fermée.

3. Soupape pour fluides selon l'une quelconque des revendications précédentes, **caractérisée en ce que** l'élément d'actionnement (62) est fixé sur l'élément en forme de bande (58), à proximité de l'articulation centrale (51).

4. Soupape pour fluides selon l'une quelconque des revendications précédentes, **caractérisée en ce que** l'élément en forme de bande (58) est réalisé en tant que bande métallique.

5. Soupape pour fluides selon l'une quelconque des revendications précédentes, **caractérisée en ce que** l'élément en forme de bande (58) présente dans la zone des parties d'étanchéité en face des ouvertures de sortie (54a, 54b) des revêtements d'étanchéité élastiques.

6. Soupape pour fluides selon l'une quelconque des revendications précédentes, **caractérisée en ce que** la paroi de séparation (50) est constituée de deux bandes d'étanchéité.

7. Soupape pour fluides selon l'une quelconque des revendications précédentes, **caractérisée en ce que** les deux ouvertures de sortie (56a, 56b) sont reliées entre elles en aval de la soupape pour fluides (10).

8. Soupape pour fluides selon l'une quelconque des revendications précédentes, **caractérisée en ce que** les deux ouvertures d'entrée (54a, 54b) sont reliées entre elles en amont de la soupape pour fluides (10).

9. Soupape pour fluides selon l'une quelconque des revendications précédentes, **caractérisée en ce que** l'élément en forme de bande (58), au moins sur une extrémité, s'appuie sur une vis de réglage (60) destinée à régler la force de précontrainte.

10. Soupape pour fluides selon la revendication 9, **caractérisée en ce que** l'élément en forme de bande (58) s'appuie sur les deux extrémités sur deux vis de réglage (60a, 60b) destinées à régler la force de précontrainte.

11. Soupape pour fluides selon l'une quelconque des revendications précédentes, **caractérisée en ce que** l'élément en forme de bande (58), sauf dans la partie de recouvrement des ouvertures de sortie (56a, 56b), présente des passages pour le passage du fluide.

12. Soupape pour fluides selon l'une quelconque des revendications précédentes, **caractérisée en ce que** celle-ci est commutée comme soupape d'inversion de flux.

13. Soupape pour fluides selon l'une quelconque des revendications précédentes, **caractérisée en ce que** celle-ci est intégrée dans la tête d'une pompe à piston, notamment d'une pompe piézoélectrique.
